# EUROPÄISCHE PATENTSCHRIFT

(11) **EP 3 318 860 B1**
(45) Veröffentlichungstag und Bekanntmachung des Hinweises auf die Patenterteilung: **28.08.2019**
(21) Anmeldenummer: 17199736.4
(22) Anmeldetag: 02.11.2017
(51) Int. Cl.: G01L 1/22

(54) **AUF SCHERPRINZIP BASIERENDE MESSACHSE MIT ÜBERLASTSCHUTZ**
SHEAR-BASED MEASURING AXLE WITH OVERLOAD PROTECTION
ESSIEU DE MESURE À CISAILLEMENT AVEC PROTECTION CONTRE LES SURCHARGES

(30) Priorität: 07.11.2016 DE 102016121259
(43) Veröffentlichungstag der Anmeldung: 09.05.2018
(73) Patentinhaber: Brosa AG, 88069 Tettnang (DE)
(72) Erfinder: IGEL, Raimund, 88069 Tettnang (DE); WELZEL, Christian, 9464 Rüthi (CH); SCHELL, Sebastian, 88214 Ravensburg (DE)
(74) Vertreter: Witte, Weller & Partner Patentanwälte mbB

(56) Entgegenhaltungen:
- WO-A1-2004/063690
- WO-A1-2004/063691
- DE-A1- 2 719 946
- DE-A1-102005 045 024
- DE-B3-102014 109 301

## Beschreibung

Die vorliegende Erfindung betrifft ein Kraftaufnehmersystem mit einem Bolzenkörper, mit einem Hülsenkörper und mit einem, vorzugsweise mehreren, Stützkörpern, wobei diese Körper in einem demontierten Zustand des Systems getrennt voneinander vorgesehen sind. Das System ist ausgelegt, durch Scherkräfte hervorgerufene Verformungen insbesondere mittels Dehnungsmessstreifen (DMS) zu messen, wobei eine zu messende Kraft von außen schräg zu einer Längsachse des Systems einwirkt. Das Kraftaufnehmersystem misst nach dem Scherprinzip, um größere Kräfte messen zu können, als es mit herkömmlichen Systemen möglich wäre, die nach dem Biegebalkenprinzip messen.

Herkömmliche Kraftaufnehmersysteme weisen einen Messkörper, vorzugsweise aus Stahl, auf, der an einer oder mehreren Stellen hinsichtlich seiner Materialstärke (z.B. durch Umfangsnuten) geschwächt ist, um dort membranartige Zonen bzw. Bereiche auszubilden, wo ein oder mehrere Messzellen angeordnet werden, um durch mechanische Verformungen hervorgerufene Dehnungen und/oder Stauchungen (Biegungen) der membranartigen Zonen zu messen. Aus den Verformungen kann auf eine die Dehnungen und/oder Stauchungen verursachende Kraft rückgeschlossen werden. Nach diesem Grundprinzip arbeitet auch die vorliegende Erfindung.

Je nach Anwendung werden meistens sog. Messachsen (siehe z.B. DE 103 02 349 B3, DE 103 02 352 A1, WO 2008/110360 A1 oder DE 10 245 768 A1) oder Messhülsen (siehe z.B. EP 2 538 189 A1) eingesetzt. Herkömmliche Messachsen und Messhülsen weisen in der Regel einen zylindrischen Körper auf. Die Messhülsen sind üblicherweise Hohlzylinder, in welche kundenseitig bereitgestellte (Maschinen-)Achsen, vorzugsweise formschlüssig, einführbar sind. Die Messachsen sind ein- oder mehrteilige Zylinder, die in kundenseitig vorgegebene Bauräume (z.B. Maschinengestell) eingeführt werden. Klassische Anwendungsbeispiele für Messachsen sind z.B. Seilrollen, die bei Aufzügen oder Kränen eingesetzt werden und in welche die Messachse eingeführt wird, um Kräfte zu messen, die auf das Seil wirken, welches von der Seilrolle geführt wird.

Kräfte von bis zu 25 t lassen sich mit herkömmlichen Messhülsen ohne größere Probleme unter Biegung messen. Höhere Kräfte sollten nach dem Scherprinzip gemessen werden.

Generell gilt, dass Kraftaufnehmer, die Scherkräfte messen, gegenüber Überlasten fehleranfälliger als Kraftaufnehmer sind, die Biegekräfte (Dehnung/Stauchung) messen. Als Beispiel wird in diesem Zusammenhang ein Kraftaufnehmer für einen Bagger genannt, der zur Handhabung von Schrott eingesetzt wird ("Baggerwaage" allgemein siehe z.B. DE 20 2013 100 715 U1). In einem Stampfbetrieb kann es zu hohen Überlasten in einer negativen Messrichtung kommen, wenn der Bagger den Schrott zusammenpresst (negative Messrichtung), anstatt den Schrott lediglich anzuheben und umzusetzen (positive Messrichtung). Außerdem werden derartige Bagger oft auch zu anderen Zwecken eingesetzt, wie z.B. zum Ziehen von Güterwaggons, wobei die ausgeübte Kraft in einem ungewöhnlichen Winkel (z.B. 45° zur Horizontalen) wirkt. Überschreiten die Kräfte einen bestimmten Schwellenwert (z.B. 150% der Nennlast), kann sich eine Kalibrierung des Messsystems dauerhaft ändern. Der Nullpunkt des Messsystems (z.B. DMS in Wheatstonescher Brückenschaltung inklusive Signalverstärkung ggf. Auswerteeinheit) kann sich bei Überlasten dauerhaft verschieben, so dass eine herstellerseitige Kalibrierung nicht mehr gegeben ist.

Ferner können sich Materialeigenschaften des Kraftaufnehmers bei Überlasten dauerhaft derart (z.B. durch plastische Verformung) verändern, dass keine auswertbaren elektrischen Messsignale mehr von den Messsensoren (DMS) geliefert werden können. Der Kraftaufnehmer bzw. der Sensor ist dann defekt.

Das Dokument DE 10 2014 109 301 B3 beschreibt ein nach dem Scherprinzip arbeitendes Kraftaufnehmersystem mit einem mechanischen Überlastschutz. Der Überlastschutz wird dadurch erzielt, dass eine Hülse des Systems zwischen sich und einem zylindrischen Bolzenkörper (Achse), der koaxial in die Hülse eingeführt ist, einen innen liegenden Hohlraum definiert, um einem axialen Mittelabschnitt der außen liegenden Hülse die Möglichkeit zu geben, (durch Verformung) radial in diesen Hohlraum einzutauchen. Sobald eine zuvor festgelegte Überlast erreicht ist, tritt eine radial vorstehende Nase des axialen Mittelabschnitts der Hülse radial in Kontakt mit dem koaxial innen angeordneten Bolzenkörper und verhindert so eine übermäßige Belastung des Systems, insbesondere der Messzone.

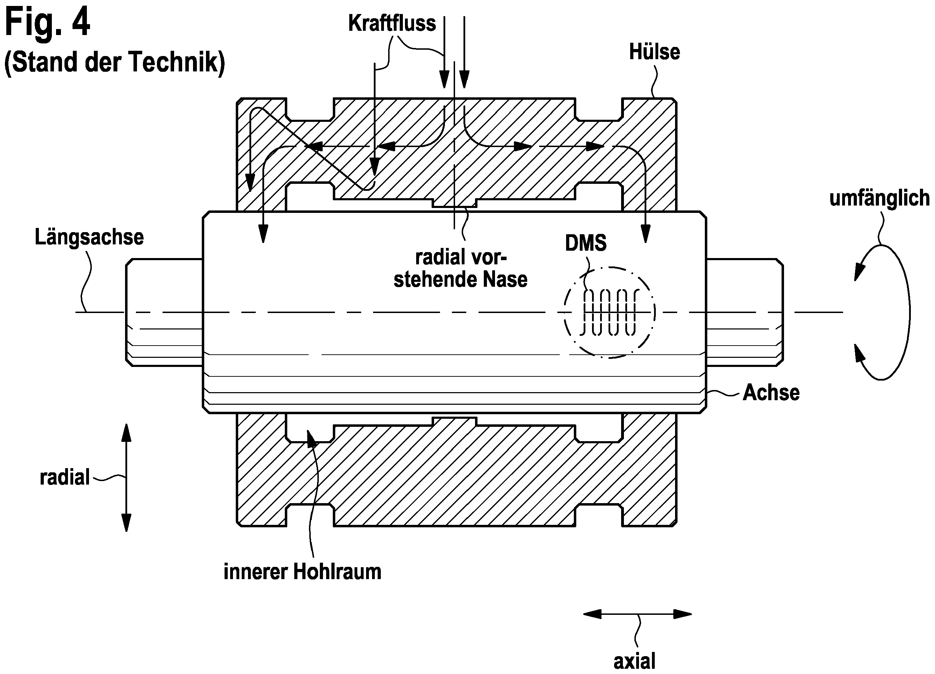

Das oben unter Verweis auf die DE 10 2014 109 301 B3 beschriebene, nach dem Scherprinzip arbeitende herkömmliche Kraftaufnehmersystem (siehe auch Fig. 4) stellt zwar einen mechanischen Überlastschutz bereit, aber nur bis zu einem gewissen Grad. Bei hohen Überlasten, die z.B. größer als 500% der Nennlast sind, verbiegt sich der innen liegende Bolzenkörper durch die von "oben" in Kontakt tretende, radial vorstehende Nase des axialen Mittelabschnitts der Hülse, bis die diametral gegenüber liegende Nase des axialen Mittelabschnitts der Hülse ebenfalls mit dem inneren Bolzenkörper in Kontakt tritt. Zu diesem Zeitpunkt sind die oben beschriebenen Nachteile (dauerhafte Veränderung der Materialeigenschaften, Verlust des Nullpunkts bzw. der Kalibrierung, etc.) schon lang, meist irreversibel, eingetreten.

Das Dokument DE 27 19 946 A1 betrifft eine Meßachse.

Es ist daher eine Aufgabe der vorliegenden Erfindung, ein nach dem Scherprinzip arbeitendes Kraftaufnehmersystem bereitzustellen, das die oben beschriebenen Nachteile überwindet. Insbesondere soll ein derartiges Kraftaufnehmersystem, ohne Beschädigungen oder andere Nachteile, wiederholt mit hohen Überlasten betrieben werden können, die deutlich über der Nennlast liegen, also z.B. größer als 500% der Nennlast sind.

Diese Aufgabe wird gelöst durch ein Kraftmesssystem zum Messen einer externen Kraft nach dem Scherprinzip, wobei die Kraft im Wesentlichen von radial außen, quer zu einer Längsachse des Kraftmesssystems einwirkt, wobei das Kraftmesssystem aufweist: zumindest einen radial innen positionierbaren, vorzugsweise zylindrischen, Bolzenkörper; einen axial außen positionierbaren, vorzugsweise mehrteiligen, Stützkörper, der eingerichtet ist, ausschließlich mit dem Bolzenkörper, vorzugsweise axial, fest verbunden zu werden; und einen, vorzugswiese einstückigen, Hülsenkörper, der: hülsenförmig zur koaxialen, vorzugsweise formschlüssigen, Aufnahme des Bolzenkörpers ausgebildet ist; sich koaxial zur Längsachse erstreckt; und radial außen, sowie vorzugsweise ausschließlich axial innen, auf dem Bolzenkörper sitzend, und vorzugsweise axial und/oder radial gegenüber dem Stützkörper beweglich, positionierbar ist; wobei der Hülsenkörper aufweist: mindestens einen axial außenliegenden ersten Abschnitt zum radialen Einleiten der Kraft über ein, vorzugsweise hülsenförmiges, externes Krafteinleitungsglied einer externen Maschine, in welche das Kraftmesssystem, vorzugsweise axial, einbaubar ist und deren Kraft zu messen ist, wobei das externe Krafteinleitungsglied radial außen auf jedem der ersten Abschnitte sitzt und wobei der erste Abschnitt radial, vorzugsweise gleichbleibend, zum Bolzenkörper beabstandet ist; mindestens einen zweiten Abschnitt zum Messen der Kraft, der zum, vorzugsweise radialen, Aufnehmen mindestens einer Messzelle eingerichtet ist und der radial innen und/oder außen eine umfänglich verlaufende (Radial-)Nut aufweist, wobei der Hülsenkörper zumindest auch in einem axial außenliegenden Endbereich des zweiten Abschnitts zum Bolzenkörper beabstandet ist; und mindestens einen dritten Abschnitt, der: axial innen angeordnet ist; axial innen an den zumindest einen zweiten Abschnitt angrenzt; und radial, vorzugsweise flächig, auf dem Bolzenkörper sitzt; und wobei in einem in die externe Maschine eingebauten und montierten Zustand des Kraftaufnehmersystems die Kraft: von außen über das externe, axial innen liegende Krafteinleitungsglied, vorzugsweise radial und ausschließlich, in jeden der ersten Abschnitte des Kraftaufnehmersystems eingeleitet wird; in einem Normalbetrieb des Kraftaufnehmersystems, vorzugsweise axial, durch den zweiten Abschnitt in den dritten Abschnitt geleitet und von dort über den Bolzenkörper in den Stützkörper geleitet wird, um das Kraftaufnehmersystem über ein axial außenliegendes Maschinengestell der externen Maschine zu verlassen, wobei das Maschinengestell auf dem mindestens einen Stützkörper sitzt; und in einem Überlastbetrieb den ersten Abschnitt, vorzugsweise elastisch, verformt, so dass der erste Abschnitt radial an den Bolzenkörper und/oder axial an den zumindest einen Stützkörper anstößt, wodurch die Kraft den zweiten Abschnitt auslassend, direkt aus dem ersten Abschnitt in den Bolzenkörper oder den Stützkörper geleitet wird und das Kraftaufnehmersystem über den Stützkörper verlässt.

Das Kraftaufnehmersystem der Erfindung zeichnet sich dadurch aus, dass der Kraftfluss im Überlastbetrieb, selbst wenn die Überlast ein Vielfaches der Nennlast überschreitet, sicher um den zweiten Abschnitt des Hülsenkörpers herum geleitet wird, so dass dieser zweite Abschnitt des Hülsenkörpers keinen Kräften bzw. Verformungen ausgesetzt ist, die zu einer plastischen Verformung, einer Verschiebung des Nullpunkts bzw. einem Verlust der Kalibrierung oder Ähnlichem führen könnte. Das Kraftaufnehmersystem ist so aufgebaut, dass, selbst bei einer axial zentralen Einleitung der Kraft, die zu messen ist, senkrecht zur Längsachse des Systems, die Kraft in axiale Endbereiche des Hülsenkörpers eingeleitet wird, die im Normalbetrieb weder mit dem Bolzenkörper noch mit dem bzw. den Stützkörpern in direktem Kontakt sind. Die drei eigentlich voneinander getrennt vorgesehenen Körper (Bolzenkörper, Hülsenkörper und (mehrteiliger) Stützkörper) sind im montierten Zustand des Systems so miteinander verbunden, dass die in die axialen Endbereiche des Hülsenkörpers eingeleiteten Kräfte im Normalbetrieb zuerst axial nach innen in den oder die zweiten Abschnitte des Hülsenkörpers eingeleitet werden, von wo sie ebenfalls axial nach innen in den dritten Abschnitt des Hülsenkörpers weitergeleitet werden. Von dort werden die Kräfte radial nach innen in den Bolzenkörper weitergeleitet, um den Bolzenkörper anschließend axial nach außen in den bzw. die Stützkörper zu verlassen, wo sie die eingeleiteten Kräfte schließlich radial an die externe Maschine bzw. deren Maschinengestell abgeben. Im Überlastbetrieb werden die Kräfte direkt vom, ggf. axial zentralen, Einleitungspunkt im Krafteinleitungskörper in die axialen Endbereiche des Hülsenkörpers geleitet, wo sie eine mechanische Verformung (Biegung) des bzw. der ersten Abschnitte des Hülsenkörpers bewirken, so dass der bzw. die ersten Abschnitte des Hülsenkörpers radial an den Bolzenkörper und/oder axial an den bzw. die Stützkörper anstoßen. Der Bolzenkörper und/oder der bzw. die Stützkörper dienen im Überlastbetrieb als Anschlag bzw. Anschläge. So ist es möglich, dass die Kraft direkt radial nach außen geleitet wird, ohne durch den bzw. die zweiten Abschnitte des Hülsenkörpers geleitet zu werden, der bzw. die für die Messung der Kraft genutzt werden.

In einer bevorzugten Ausführungsform ist das Kraftaufnehmersystem spiegelsymmetrisch, vorzugsweise zu einer Mittelebene senkrecht zur Längsachse, aufgebaut, wobei der Hülsenkörper zwei erste Abschnitte, die axial außen angeordnet sind, zwei zweite Abschnitte und einen axial zentral angeordneten dritten Abschnitt aufweist, wobei jeder der zweiten Abschnitte axial zwischen einem der ersten Abschnitte und dem dritten Abschnitt angeordnet ist.

Die spiegelsymmetrische Struktur des Kraftaufnehmers ermöglicht einen stabilen Aufbau des Kraftaufnehmersystems. Die drei wesentlichen Komponenten (Hülsenkörper, Bolzenkörper und Stützkörper) sind so relativ zueinander angeordnet, dass selbst Kräfte gemessen werden können, die nicht in der Vorzugsrichtung (senkrecht zur Längsachse) eingeleitet werden und die auch nicht axial mittig auf dem das Krafteinleitungsglied wirken. Die Stützkörper umgeben den Hülsenkörper axial angeordnet und sorgen so für eine stabile Abstützung des gesamten Systems.

Bei einer vorteilhaften Ausgestaltung ist der Bolzenkörper als Vollkörper (d.h. aus dem Vollen) mit einer äußeren Mantelfläche ausgebildet, die vorzugsweise einen konstanten Radius aufweist, wobei in den Stirnseiten des Bolzenkörpers jeweils eine oder mehrere Öffnungen vorgesehen sind, in welche Befestigungsmittel einführbar sind, um die Stützkörper fest am Bolzenkörper zu befestigen, ohne dass die Stützkörper den Hülsenkörper berühren, wobei die Stützkörper axiale (Durchgangs-)Öffnungen zur Aufnahme und Fixierung der Befestigungsmittel aufweisen.

Der Vollkörper des Bolzenkörpers ermöglicht einen gleichmäßigen und homogenen Verlauf des Kraftflusses durch den Bolzenkörper. Die zylindersymmetrische Ausgestaltung des Bolzenkörpers erleichtert die Montage des Systems sowie die Herstellung der korrespondierenden Komponenten (Stützkörper und Bolzenkörper). Der Bolzenkörper und die Stützkörper sind so dimensioniert und eingerichtet, dass der Hülsenkörper kraftleitend auf dem Bolzenkörper gelagert werden kann, ohne die Stützkörper zu berühren. Die Verbindung zwischen dem Bolzenkörper und den Stützkörpern ist derart, dass der Kraftfluss sicher aus dem Bolzenkörper in die Stützkörper transferiert werden kann, ohne dass es zu ungewünschten Relativbewegungen zwischen dem Bolzenkörper und den Stützkörper kommt.

Bei einer weiteren besonderen Ausgestaltung weist das System ferner Dichtungseinrichtungen auf, wobei die Stützkörper an ihren Stirnflächen, die dem Hülsenkörper axial gegenüberliegen, in Umfangsrichtung verlaufende (Axial-)Nuten zur Aufnahme der Dichtungseinrichtungen, vorzugsweise von O-Ringen, aufweisen.

Da die Stützkörper im montierten Zustand des Systems beabstandet zum Hülsenkörper angeordnet sind, können Störkörper (z.B. Schmutz, Staub, etc.) in den Raum zwischen den Stützkörpern und dem Hülsenkörper eindringen. Wenn dieser Raum sich mit derartigen Partikeln füllt, entsteht eine "Kraftflussbrücke", die die eingeleitete Kraft, die zu messen ist, zumindest teilweise direkt vom ersten Abschnitt des Hülsenkörpers in die Stützkörper einleitet. Des Weiteren wird die Flexibilität, d.h. die Eigenschaft, verbogen werden zu können, der ersten Abschnitte des Hülsenkörpers negativ beeinflusst, so dass nicht sicher ausgeschlossen werden kann, dass der bzw. die ersten Abschnitte des Hülsenkörpers im Überlastbetrieb auch sicher an den innenliegenden Bolzenkörper anstoßen. So könnte es passieren, dass der Kraftfluss im Überlastbetrieb weiterhin (auch) durch den zweiten Abschnitt des Hülsenkörpers geleitet wird, der für die Messung der Kraft verantwortlich ist. Die eingangs erwähnten Beschädigungen und Nachteile wären dann weiterhin möglich.

Ferner ist es von Vorteil, wenn der Bolzenkörper axial länger als der Hülsenkörper ist und die Stützkörper zur formschlüssigen, vorzugsweise axialen, Aufnahme des Bolzenkörpers eingerichtet sind.

Der Bolzenkörper steht dann gegenüber dem Hülsenkörper vor und erleichtert so die beabstandete Anordnung des Hülsenkörpers gegenüber dem bzw. den Stützkörpern. Die formschlüssige Aufnahme des Bolzenkörpers in den Stützkörpern verbessert eine homogene Kraftübertragung zwischen dem Bolzenkörper und den Stützkörpern. Durch den Formschluss berührt der Bolzenkörper den Stützkörper flächig.

Vorzugsweise entspricht ein Außenradius des ersten Abschnitts des Hülsenkörpers einem Außenradius des Stützkörpers, und vorzugsweise auch einem Innenradius des Krafteinleitungsglieds und einem Innenradius des Maschinengestells, wobei vorzugsweise der Innenradius des Krafteinleitungsglieds kleiner als ein Außenradius des dritten Abschnitts ist. Insbesondere ist ein Außenradius des Hülsenkörpers maximal so groß wie der Außenradius des Stützkörpers.

Auf diese Weise ist gewährleistet, dass das Kraftaufnehmersystem im montierten Zustand in die externe Maschine eingeführt und dort eingebaut werden kann. Dies erleichtert die Montage des Kraftaufnehmersystems vor Ort. Das Kraftaufnehmersystem kann auf der Seite des Herstellers des Kraftaufnehmersystems vormontiert werden und wird dann am Ort des Maschinenbetreibers final eingebaut.

Bei einer weiteren Ausgestaltung ist zwischen jedem der Stützkörper und dem Hülsenkörper im montierten Zustand des Kraftaufnehmersystems ein Axialspiel vorgesehen.

Das Axialspiel stellt sicher, dass der erste Abschnitt des Hülsenkörpers, der beabstandet zum Bolzenkörper angeordnet ist, gebogen werden kann.

Weiter ist es bevorzugt, wenn der Bolzenkörper, der Hülsenkörper und die Stützkörper in einem demontierten Zustand des Kraftaufnehmersystems voneinander getrennt vorgesehen sind.

Diese Maßnahme erleichtert die Herstellung und den Zusammenbau des Systems.

Insbesondere ist ein Außenradius des dritten Abschnitts des Hülsenkörpers so gewählt, dass der dritte Abschnitt des Hülsenkörpers über seine gesamte axiale Länge radial zum Krafteinleitungsglied beabstandet ist.

Mit dieser Maßnahme wird der Geometrie des Krafteinleitungsglieds Rechnung getragen. Unabhängig von der tatsächlichen Form des Krafteinleitungsglieds ist der Hülsenkörper so geformt, dass die eingeleitete Kraft immer über die axial außenliegenden ersten Abschnitte des Hülsenkörpers in den Hülsenkörper eintreten. Es ist also nicht zwingend erforderlich, dass der erste Abschnitt des Hülsenkörpers immer einen Außenradius aufweist, der größer als der Außenradius des dritten Abschnitts des Hülsenkörpers ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Schnittansicht (Fig. 1A) sowie eine Seitenansicht eines Kraftaufnehmersystems der Erfindung;
- Fig. 2: eine Vergrößerung eines Bereichs II der Fig. 1A;
- Fig. 3: eine Anwendung des Kraftaufnehmersystems als Baggerwaage in einem herkömmlichen Baggerarm; und
- Fig. 4: einen Querschnitt eines herkömmlichen Kraftaufnehmersystems, das nach dem Scherprinzip misst.

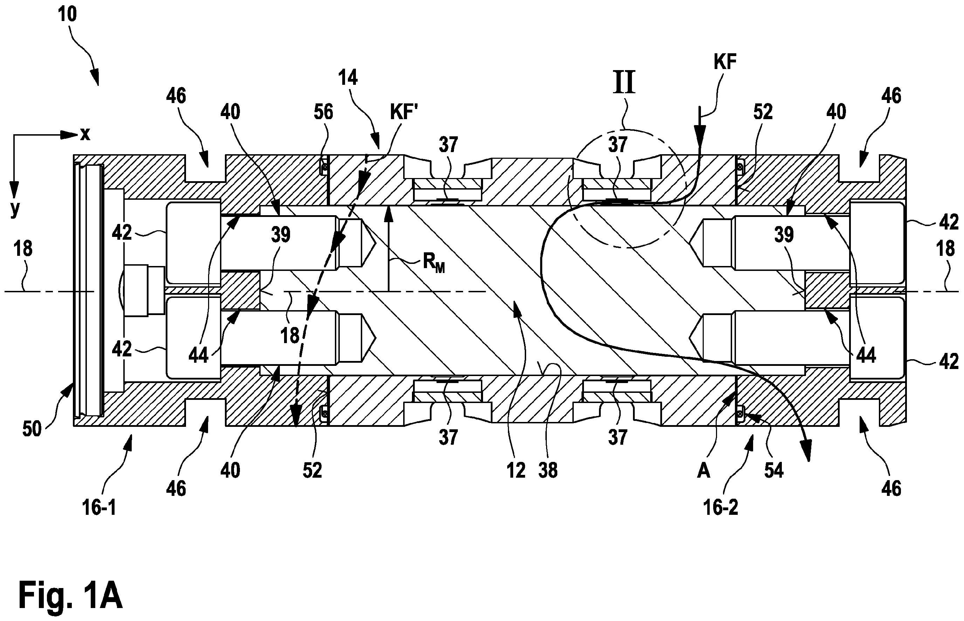

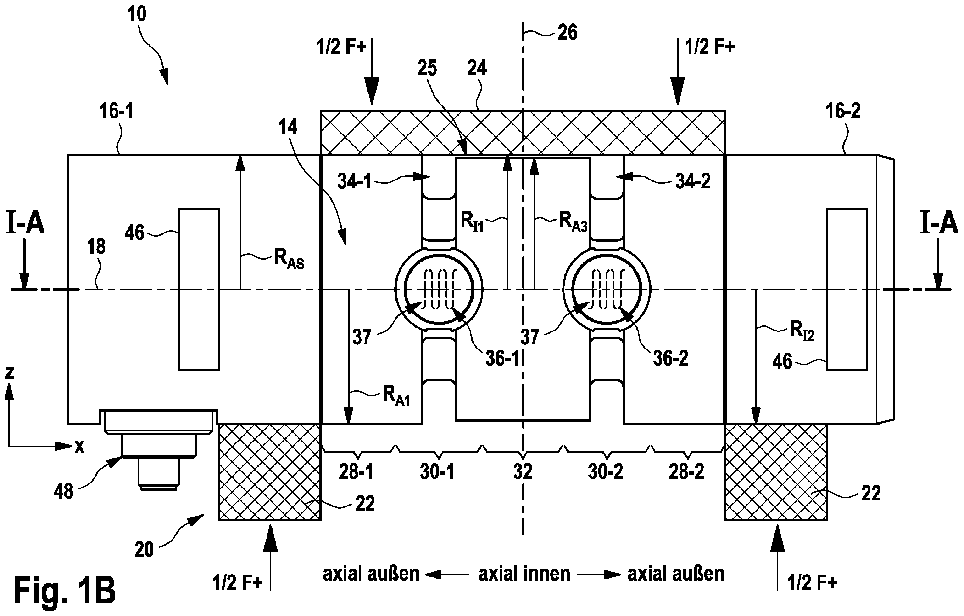

Fig. 1 zeigt ein Kraftaufnehmersystem 10 gemäß der Erfindung, nämlich des Typs "Kraftaufnehmerachse" (KMA). Nachfolgend werden die Begriffe "Kraftaufnehmersystem", "System" und "Kraftaufnehmerachse" synonym verwendet werden.

Fig. 1A zeigt eine teilweise geschnitten dargestellten Querschnitt des Systems 10 der Fig. 1B, wobei der Querschnitt der Fig. 1A entlang einer Linie I-A in Fig. 1B verläuft. Das System 10 wird nachfolgend allgemein unter gleichzeitiger Bezugnahme auf die Fig. 1A und 1B beschrieben, die das identische System 10 zeigen.

Das System 10 weist generell einen Bolzenkörper 12, einen Hülsenkörper 14 sowie einen, ggf. mehrteiligen, Stützkörper 16 auf, die in einem demontierten Zustand voneinander getrennte Komponenten des Systems 10 darstellen. Das System 10 der Fig. 1 weist exemplarisch zwei Stützkörper 16-1 und 16-2 auf, die in einem montierten Zustand des Systems 10, der in Fig. 1 gezeigt ist, den Bolzenkörper und den (einen) Hülsenkörper 14 z.B. axial (X-Richtung) mittig zwischen sich einschließen. Das System 10 weist eine Längsachse 18 auf, die in den Figuren 1A und 1B durch eine strichpunktierte Linie angedeutet ist und die auch einer (nicht näher bezeichneten) Einbauachse entspricht. Die Längachse 18 ist parallel zur X-Richtung des kartesischen Koordinatensystems XYZ orientiert. Die Körper 12 - 16 sind vorzugsweise im Wesentlichen rotationssymmetrisch, und vorzugsweise zylindersymmetrisch, ausgebildet. Im Wesentlichen rotationssymmetrisch bedeutet, dass eine jeweilige Grundformen der Körper 12 - 16 rotationssymmetrisch ist, wenn man leichten Abweichungen (siehe z.B. Einkerbungen 46 im Stützkörper 16 zur Verdrehsicherung des montierten Systems 10) absieht. Ein Vierkantrohr ist z.B. rotationssymmetrisch. Bevorzugt werden aber zylindersymmetrische Körper eingesetzt, um das System beim Einbau in eine externe Maschine 20 (siehe Fig. 1B) nicht ausrichten zu müssen, um die Kraft messen zu können.

In der Fig. 1B ist die externe Maschine 20 zusätzlich angedeutet, um eine Einbausituation des Systems 10 zu veranschaulichen. Die externe Maschine 20, die nicht Teil der beanspruchten Erfindung ist, umfasst z.B. ein axial außenliegendes Maschinengestell 22 und ein axial innen liegendes Krafteinleitungsglied 24 (wie z.B. eine Seilrolle). Es versteht sich, dass das Maschinengestell 22 und das Krafteinleitungsglied 24 - entgegen der Darstellung der Fig. 1B - jeweils zylinder- bzw. rotationssymmetrisch ausgebildet sein können, sich also in der Regel vollumfänglich um die Längsachse 18 erstrecken, auch wenn sie in der Fig. 1B nur partiell gezeigt sind. Das Krafteinleitungsglied 24 weist in der axialen Richtung X eine hier nicht näher bezeichnete Länge auf, die kleiner oder gleich einer axialen Länge des Hülsenkörpers 14 ist, damit eine eingeleitete Kraft nur auf den Hülsenkörper 14, nicht aber auf den bzw. die Stützkörper 16 einwirken kann. Auf diese Weise wird - im Normalbetrieb - ein Kraftfluss KF (dicke Linie KF in der rechten Hälfte der Fig. 1A) auf eine gewünschte Weise durch das System 10 gelenkt bzw. geleitet.

Eine Geometrie bzw. eine äußere Kontur des Hülsenkörpers 14 ist an eine Form des Krafteinleitungsglieds 24 angepasst, so eine einwirkende Kraft, die zu messen ist, vorzugsweise ausschließlich über axiale Endbereiche des Hülsenkörpers 14 in das System 10 eingeleitet wird. Diese Kraft ist in der Fig. 1B durch zwei Pfeile angedeutet, die jeweils mit "1/2 F+" bezeichnet sind und die sich parallel zur (radialen) Z-Richtung erstrecken. Die Kräfte "1/2 F+" können z.B. durch ein axial mittig auf dem Krafteinleitungsglied 24 sitzendes und geführtes Seil (nicht gezeigt) hervorgerufen werden. Die durch das Seil eingeleitete Kraft (nicht gezeigt), die in Summe den Betrag F aufweist und üblicherweise senkrecht zur Längsachse orientiert ist, wird im Normalbetrieb links und rechts vom Krafteinleitungsglied 24 über die axialen Endbereiche des Hülsenkörpers 14 an den Bolzenkörper 12 (vgl. Fig. 1A) transferiert, von wo sie wiederum in die Stützkörper 16 geleitet wird, wie es in der rechten Hälfte der Fig. 1A exemplarisch durch den Kraftfluss KF angedeutet ist, auf den nachfolgend noch näher eingegangen wird. Es versteht sich, dass der Kraftfluss KF analog durch die linke Hälfte der Fig. 1A verläuft, auch wenn es hier nicht explizit gezeigt ist.

Ein axialer Mittelabschnitt 32 (3. Abschnitt) des Hülsenkörpers 14, der nachfolgend noch näher erläutert werden wird, ist nicht in Kontakt mit dem Krafteinleitungsglied 24, um die einwirkende Kraft ausschließlich in den axialen Endbereichen zwischen dem Krafteinleitungsglied 24 und dem Hülsenkörper 14 zu übertragen. Ein entsprechendes (Radial-)Spiel zwischen dem Krafteinleitungsglied 24 und dem axialen Mittelabschnitt 32 des Hülsenkörpers 14 ist in Fig. 1B durch einen Pfeil 25 angedeutet.

Der Hülsenkörper 14 ist vorzugsweise einstückig, d.h. aus einem einzigen Teil, ausgebildet und kann in mehrere (Funktions-)Abschnitte 28-32 unterteilt werden. Die Abschnitte 28-32 sind exemplarisch spiegelsymmetrisch zu einer Symmetrieebene 26 angeordnet, die in der Fig. 1B durch eine Strichlinie angedeutet ist und die senkrecht auf der Zeichnungsebene der Fig. 1B steht.

Der Hülsenkörper 14 der Fig. 1B weist zwei axial außenliegende erste (Krafteinleitungs-)Abschnitte 28-1 und 28-2 sowie zwei zweite (Mess-/Verformungs-)Abschnitte 30-1 und 30-2 auf, die sich axial nach innen, zur Symmetrieebene 26 hin an die ersten Abschnitte 28-1 und 28-2 anschließen. Der Hülsenkörper 14 weist ferner einen axial mittig angeordneten dritten (Stütz-)Abschnitt 32 auf. Der dritte Abschnitt 32 schließt die zweiten Abschnitte 30-1 bzw. 30-2 axial mit den jeweiligen Abschnitten 28-1 und 28-2 ein.

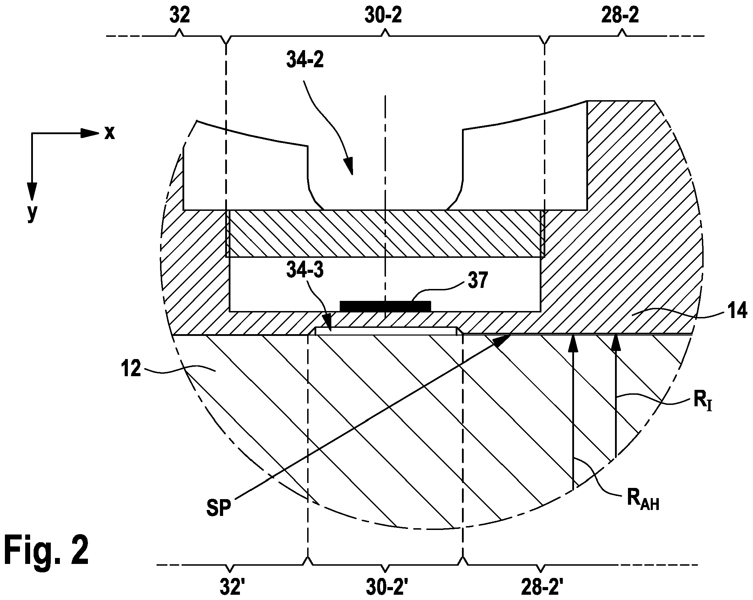

Die ersten Abschnitte 28-1 und 28-2 dienen der Krafteinleitung. Die ersten Abschnitte 28-1 und 28-2 stehen in der radialen Richtung, vorzugsweise vollflächig, mit dem Krafteinleitungsglied 24 in Kontakt. Die ersten Abschnitte 28-1 und 28-2 sind aber gegenüber dem radial innen angeordneten Bolzenkörper 12 (radial) beabstandet angeordnet, wie es unter Bezugnahme auf Fig. 2 noch näher erläutert werden wird, die den Kreis "II" in Fig. 1 in Vergrößerung zeigt. Dies bedeutet mit anderen Worten, dass ein Außendurchmesser R_{A1} der ersten Abschnitte 28 einem Innendurchmesser R_{I1} des Krafteinleitungsglieds 24 im Wesentlichen entspricht (Passsitz bzw. Übergangspassung). Ein Außendurchmesser R_{A3} des dritten Abschnitts 32 ist hier, aufgrund der Geometrie des Krafteinleitungsglieds 24, kleiner als der Innendurchmesser R_{I1} des Krafteinleitungsglieds 24. Ein radialer Abstand zwischen dem dritten Abschnitt 32 und dem Krafteinleitungsglied 24 ist so gewählt, dass das Krafteinleitungsglied 24 selbst dann nicht (durch Biegung) in Kontakt mit dem dritten Abschnitt 32 kommt, wenn die von außen auf das Krafteinleitungsglied 24 einwirkende Kraft axial mittig angreift und um ein Vielfaches größer als eine Nennlast (z.B. größer oder gleich dem Fünffachen der Nennlast) ist.

Ein Außenradius R_{AS} der Stützkörper 16-1 und 16-2 ist vorzugsweise genauso groß wie der Außenradius R_{A1} der ersten Abschnitte 28-1 und 28-2. In diesem Fall repräsentiert das System 10 in seiner Gesamtheit, also wenn der Bolzenkörper 12, der Hülsenkörper 14 und die Stützkörper 16 miteinander montiert sind, eine im Wesentlichen zylindrische Form mit einem im Wesentlichen einheitlichen (Außen-)Radius R_{A1} auf, wenn man von den, vorzugsweise vollumfänglich umlaufenden, äußeren (Radial-)Nuten 34 in den zweiten Abschnitten 30 absieht.

Die zweiten Abschnitte 30-1 und 30-2 dienen als membranartige Verformungsbereiche, wo der Hülsenkörper 14 aufgrund einer absichtlich herbeigeführten Materialschwächung bzw. geringeren Materialstärke (elastisch) verformt wird. Diese Verformungen können mit geeigneten Sensoren (z.B. DMS 37) gemessen und anschließend datentechnisch verarbeitet werden, um die ursächliche Kraft zu berechnen. Der Fachmann weiß, wie dies zu bewerkstelligen ist.

Im Bereich der zweiten Abschnitte 30 des Hülsenkörpers 14 sind in den Fig. 1 und 2 exemplarisch sowohl radial innen als auch radial außen umfängliche Nuten 34 ausgebildet, um den Kraftfluss KF durch das System 10, insbesondere durch den Hülsenkörper 14 zu lenken bzw. zu leiten. Eine Funktion der zweiten Abschnitte 30 ist es, einen Übergang zwischen den ersten Abschnitten 28 und dem dritten Abschnitt 32 mit verringerter Materialstärke bereitzustellen, wie es nachfolgend unter Bezugnahme auf Fig. 2 noch näher erläutert werden wird.

Eine Aufgabe des axial mittig angeordneten, dritten Abschnitts 32 ist es, den Kraftfluss KF vom Hülsenkörper 14 in den Bolzenkörper 12 einzuleiten, wenn normale Kräfte (Normalbetrieb), d.h. keine Überlasten, auf das System 10 einwirken. Im Normalbetrieb des Systems 10 treten die eingangs beschriebenen Nachteile (plastische Verformung, Verschiebung des Nullpunkts bzw. Verlust der Kalibrierung, etc.) nicht auf. Derartige nachteilige Effekte treten nur in einem Überlastbetrieb auf, wo die einwirkenden Kräfte größer als ein vorgeschriebenes Vielfaches (z.B. mehr als 150 %) der Nennlast sind. Wie es nachfolgend noch näher erläutert werden wird, wird der Kraftfluss KF' im Überlastbetrieb so gelenkt bzw. geleitet, dass der Kraftfluss KF' den zweiten Abschnitt 30 und den dritten Abschnitt 32 des Hülsenkörpers 14 meidet bzw. erst gar nicht in die Abschnitte 30 und 32 eintritt.

Der in der Fig. 1A gezeigte Kraftfluss KF entsteht im Normalbetrieb und verläuft durch den zweiten Abschnitt 30 hindurch, wo die Sensoren (z.B. DMS 37) zum Messen der mechanischen Verformung des Hülsenkörpers 14 angeordnet sind. Es ist die besondere Geometrie des Hülsenkörpers 14, die dafür sorgt, dass der Kraftfluss KF' im Überlastbetrieb von den ersten Abschnitten 28 direkt radial nach außen in die Stützkörper 16 unter Meidung der zweiten Abschnitte 30 geleitet wird (vgl. die mit KF' bezeichnete Strichlinie in der linken Hälfte der Fig. 1A). Im Überlastbetrieb wird der erste Abschnitt 28 so stark radial nach innen gebogen, dass der erste Abschnitt 28 an eine Außenfläche des Bolzenkörpers 12 anstößt, so dass der Kraftfluss KF' vom ersten Abschnitt 28 direkt in den Bolzenkörper 12 eingeleitet und in Richtung des entsprechenden Stützkörpers 16 zwecks Ausleitung der Kraft umgelenkt wird. Selbst für den Fall, dass die einwirkende Kraft um ein Vielfaches größer als eine maximal zulässige Überlast ist, kommt es zu keiner Verformung des inneren Bolzenkörpers 12 der sich negativ auf den zweiten Abschnitt 30 auswirken könnte, so dass das System 10 unter allen Bedingungen unbeschadet arbeiten kann.

In Fig. 2 ist eine Vergrößerung des in der Fig. 1A mit II bezeichneten Bereichs des Systems 10 gezeigt. Anhand der Fig. 2 wird nachfolgend aufgezeigt werden, wie die Grenzen der Abschnitte 28-32 in der axialen Richtung x definiert werden können. Im oberen Bereich der Fig. 2 ist eine erste Möglichkeit gezeigt, wie die Abschnitte 28-30 in der axialen Richtung definiert sein können. In der unteren Hälfte der Fig. 2 ist eine alternative Dimensionierung dieser Abschnitte gezeigt, die mit 28-2', 30-2' und 32' bezeichnet sind.

Die Fig. 2 verdeutlicht ferner eine Spielpassung SP zwischen dem Hülsenkörper 14 und dem Bolzenkörper 12. Die Spielpassung SP ist in der axialen Richtung X z.B. so dimensioniert, dass sie sich entlang des axialen Endbereichs des Hülsenkörpers 14 über dessen gesamte axiale Länge (beginnend vom axial innen liegenden Ende der inneren radialen Nut 34-3 nach axial außen (positive X-Richtung) erstreckt. Je nach Wahl der Grenze zwischen dem ersten Abschnitt 28 bzw. 28' und dem zweiten Abschnitt 30 bzw. 30' ist entweder nur der erste Abschnitt (siehe 28-2') außer Kontakt mit bzw. radial beabstandet zu dem Bolzenkörper 12 oder es ist zusätzlich auch der axial außen liegende Bereich des zweiten Abschnitts (siehe 30-2, ohne die Nut 34-3 zu berücksichtigen) berührungslos angeordnet, d.h. außer Kontakt mit bzw. beabstandet zum Bolzenkörper 12. Der Hülsenkörper 14 sollte frühestens ab dem axial innen liegenden Ende der Nut 34-3, vorzugsweise flächig, mit dem Bolzenkörper 12 in Kontakt kommen, wenn man von axial außen auf das System 10 blickt.

Die Fig. 2 zeigt ferner, dass es neben der inneren (Radial-)Nut 34-3 eine axial breitere, radial außen angeordnete (Umfangs-)Nut 34-2 geben kann. Die Nuten 34-2 und 34-3 bewirken eine Materialverjüngung im zweiten Abschnitt 30-2 bzw. 30-2', wo der Verformungssensor (DMS 37) vorzugsweise angebracht wird. Welche der Nuten 34-2 und 34-3 tatsächlich vorgesehen ist, wie diese Nuten 34 orientiert sind (axial und/radial) und wie viele Nuten 34 vorhanden sind, obliegt der Wahl des Konstrukteurs des Systems 10.

In der Fig. 2 ist der exemplarische, als Verformungssensor dienende DMS 37 radial außen am zweiten Abschnitt 30-2 bzw. 30-2' des Hülsenkörpers 14 angebracht. Es versteht sich, dass der DMS 37 alternativ oder ergänzend radial innen vorgesehen werden könnte.

Ferner geht die innere Radialnut 34-3 in der axialen Richtung X betrachtet stufenförmig in den zweiten Abschnitt 28-2' bzw. einen axial außen liegenden Endbereich des zweiten Abschnitts 30-2 über, so dass die Materialstärke hier exemplarisch wieder zunimmt. Es versteht sich, dass dieser stufenförmige Übergang weggelassen werden kann, so dass ein radialer Abstand des Bolzenkörpers 12 zum Hülsenkörper 14 von axial außen bis zum axial innen liegenden Ende des zweiten Abschnitts 30-2' konstant sein kann. Dem Fachmann ist klar, dass es auf die konkrete geometrische Form nicht ankommt. Es kommt allein darauf an, dass der Hülsenkörper im ersten Abschnitt 28, und ggf. auch im axial außenliegenden Endabschnitt des zweiten Abschnitts 30-2 vor der Nut 34-3 (sofern diese vorhanden ist) nicht in Kontakt mit dem Bolzenkörper 12 kommt. Im Überlastbetrieb wird der Kraftfluss KF' dadurch durch den ersten Abschnitt 28 des Hülsenkörpers 14 direkt in den Bolzenkörper 12 eingeleitet und der zweite Abschnitt 30 bzw. 30' wird vollständig umgangen.

In der Fig. 2 ist ferner gezeigt, dass der dritte Bereich 32 bzw. 32' über seine gesamte axiale Länge (flächig) auf dem Bolzenkörper 12 sitzt (Passsitz). Je nach Definition der Grenze zwischen dem dritten Abschnitt 32 und dem zweiten Abschnitt 30 sitzt ggf. auch ein axial innenliegender Endbereich des zweiten Abschnitts (hier 30-2) auf dem Bolzenkörper 12 (Passsitz). Wenn eine "echte" innere Radialnut 34-3 vorgesehen ist, so sitzt der Hülsenkörper 14 vorzugsweise ab einem axial innenliegenden Ende der Nut 34-3 auf dem Bolzenkörper 12, wie es in Fig. 2 gezeigt ist. Um den Kraftfluss KF' im Überlastbetrieb sicher aus dem zweiten Abschnitt 30-2 bzw. 30-2', wo der DMS 37 sitzt, herauszuhalten, sollte zwischen dem Bolzenkörper 12 und dem Hülsenkörper 14 ein Zwischenraum vorgesehen werden, der fortwährend existiert, auch wenn der erste Abschnitt 28-2 bzw. 28-2' durch Verformung in Kontakt mit dem Bolzenkörper 12 kommt.

Zurückkehrend zur Fig. 1 werden nachfolgend die Stützkörper 16-1 und 16-2 näher beschrieben. Die Stützkörper 16 sitzen axial außen benachbart zum Hülsenkörper 14 und berühren den Hülsenkörper 14 im montierten Zustand des Systems 10 nicht. Die Stützkörper 16 nehmen jeweils den Bolzenkörper 12, vorzugsweise formschlüssig, in der axialen Richtung X auf. Der Bolzenkörper 12 weist z.B. eine zylindrische äußere Mantelfläche 38 auf, die vorzugsweise in einem Passsitz in den Stützkörpern 16 sitzt. Stirnseiten 39 des Bolzenkörpers 12 können mit axialen Öffnungen 40 (z.B. mit jeweiligem Innengewinde) zur Aufnahme eines Befestigungsmittels 42 (z.B. Schrauben) versehen sein. Mit den Befestigungsmitteln 42 werden die Stützkörper 16 fest und direkt mit dem Bolzenkörper 12 verbunden. Die Stützkörper 16 weisen zu diesem Zweck weitere (Durchgangs-)Öffnungen 44 auf (z.B. ohne Gewinde) auf. Alternativ könnten die Stützkörper 16 z.B. direkt in den Bolzenkörper 12 eingeschraubt werden, wobei die Stützkörper 16 entsprechende Außengewinde (nicht gezeigt) und der Bolzenkörper 12 entsprechende Innengewinde (nicht gezeigt) aufweisen würde, so dass auf die Öffnungen 40 und 44 sowie die Befestigungsmittel 42 verzichtet werden könnte. In diesem Fall könnte eine axiale Länge des Bolzenkörpers 12 sogar kürzer als die des Hülsenkörpers 14 sein, indem die Stützkörper 16 entsprechend länger dimensioniert werden.

Der Stützkörper 16 kann ferner eine oder mehrere Einkerbungen 46 in seiner Außenfläche aufweisen, um eine Verdrehsicherung des Systems 10 gegenüber der externen Maschine 20 (vgl. Fig. 1B) bzw. deren Maschinengestell 22 zu ermöglichen. Der Stützkörper 16-1 kann in seinem Inneren - abweichend vom Stützkörper 16-2 - mit einer nicht näher dargestellten und bezeichneten Auswerteelektronik versehen sein, deren Anschluss 48 in der Fig. 1B gezeigt ist. Außerdem können die Stützkörper 16, sofern erforderlich, mit Deckeln 50 versehen sein, um das System 10 nach außen abzudichten, insbesondere im Falle der Auswerteelektronik, um diese gegenüber Umwelteinflüsse (Licht, Dreck, Feuchtigkeit, etc.) zu schützen.

Eine Stirnfläche 52 der Stützkörper 16, die dem Bolzenkörper 12 unmittelbar axial gegenüberliegt, kann mit einer umlaufenden Axialnut versehen sein, um eine Dichtung 56 (z.B. einen O-Ring) aufzunehmen. Die Dichtung 56 verhindert das Eindringen von Dreck oder anderen störenden Partikeln, um sicherzustellen, dass zwischen dem Hülsenkörper 14 und den Stützkörpern 16 ein immer axiales Spiel A (siehe Fig. 1A) vorhanden ist. Dieses axiale Spiel A ist so dimensioniert, dass die ersten Abschnitte 28 des Hülsenkörpers 14 sicher verformt werden können, um den ersten Abschnitt 28 als Überlastschutz mit dem Bolzenkörper 12 und/oder dem Stützkörper 16 in Kontakt zu bringen. In beiden Fällen wird der Kraftfluss KF' um den zweiten Abschnitt 30 - und damit um die Messzelle 36 - herum geleitet, wenn die Kraft eine Überlast annimmt. Bevorzugt ist die Variante, bei der der Hülsenkörper 14 ausschließlich mit dem Bolzenkörper 12 in Kontakt tritt. Die Fig. 1 zeigt, dass die ersten Abschnitte 28 des Hülsenkörpers 14 sowohl axial als auch radial außer Kontakt mit dem Bolzenkörper 12 bzw. den Stützkörpern 16 sind. Durch die Art und Weise, wie der Hülsenkörper 14 über den Bolzenkörper 12 an den Stützkörper 16 gekoppelt ist, wird es im Überlastbetrieb möglich, den Kraftfluss KF' um die Messzelle 36 bzw. den DMS 37 herum zu leiten.

Ein Außenradius R_{M} des zylindrischen Bolzenkörpers 12 entspricht im Wesentlichen einem Innenradius einer (Formschluss-)Aufnahme (nicht näher in Fig. 1 gezeigt und bezeichnet) des Stützkörpers 16, die in Form einer Axialausnehmung im Stützkörper 16 vorgesehen sein kann.

Ein Einbau des Systems 10 in die externe Maschine 20 bzw. ein Zusammenbau des Systems 10 ist einfach. Zuerst wird der Hülsenkörper 14 axial auf den Bolzenkörper 12 geschoben. Anschließend werden die Stützkörper 16 von axial außen auf die Stirnseiten 39 des Bolzenkörpers 12 aufgesteckt. Anschließend werden die Befestigungsmittel 42 in die Öffnungen 44 in dem Stützkörper 16 und in die Öffnungen 40 im Bolzenkörper 12 eingeführt und befestigt, so dass die Stützkörper 16 fest (und lösbar) mit dem Bolzenkörper 12 verbunden sind. Danach kann das System axial in das Maschinengestell 22 und das Krafteinleitungsglied 24 eingeführt werden. Schließlich werden die Stützkörper 16 z.B. mittels der Einkerbungen 46 verdrehsicher am Maschinengestell 22 befestigt.

Alternativ können die Körper 12-16 des Systems 10 auch nacheinander in die externe Maschine 20 eingeführt werden, wobei man in diesem Fall mit dem Hülsenkörper 14 beginnt, dem der Bolzenkörper 12 folgt, an denen die Stützkörper 16 befestigt werden.

Ferner versteht es sich, dass die in den Figuren 1 bis 2 gezeigten Geometrien bzw. Formen nur exemplarischer Natur sind. So ist es z.B. nicht zwingend erforderlich, dass das Krafteinleitungsglied 24 als Hohlzylinder mit einem konstanten Innenradius ausgebildet ist. Das Krafteinleitungsglied 24 könnte in solchen Bereichen, die später in Kontakt mit den ersten Abschnitten 28 des Hülsenkörpers 14 treten sollen, radial nach innen vorstehende Vorsprünge aufweisen, wohingegen mittlere Abschnitte des Krafteinleitungsglieds 24 einen größeren Innenradius aufweisen können, so dass der dritte Abschnitt 32 des Hülsenkörpers 14 in diesem Fall den gleichen Außenradius aufweisen könnte wie der erste Abschnitt 28. In diesem Fall wäre noch immer ein radialer Abstand zwischen dem dritten Abschnitt 32 des Hülsenkörpers 14 und dem radial gegenüberliegenden Körper des Krafteinleitungsglieds 24 gegeben, so dass die Kraft ausschließlich über die ersten Abschnitte 28 des Hülsenkörpers 14 eingeleitet werden.

Auch muss eine äußere Gestalt des Bolzenkörpers 12 nicht "perfekt" zylindrisch sein. Der Bolzenkörper 12 sollte jedoch vorzugsweise rotationssymmetrisch und insbesondere zylindersymmetrisch ausgebildet sein. Der Bolzenkörper 12 könnte auch wie in Fig. 4 gezeigt ausgebildet sein.

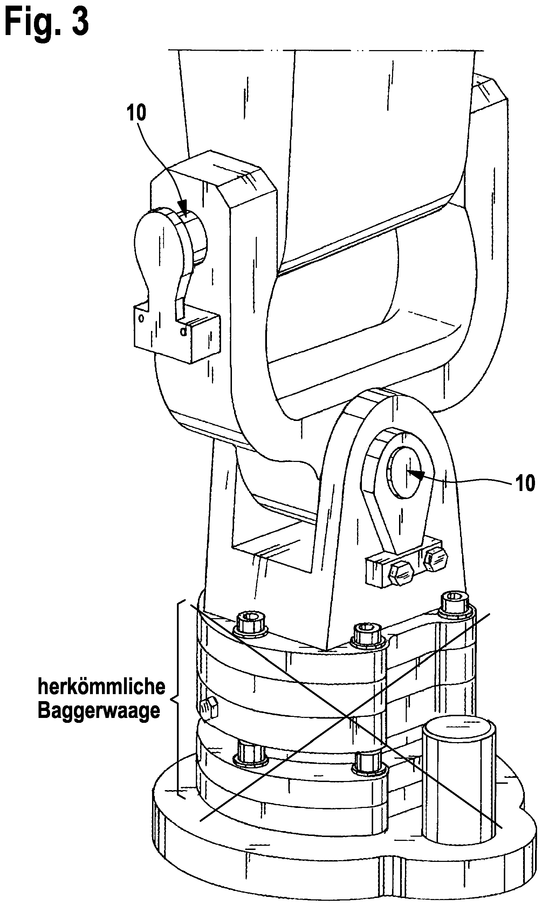

Fig. 3 zeigt eine perspektivische Ansicht eines Bereich einer Gelenkstelle eines Baggerarms, der eine konventionelle Baggerwaage gemäß der eingangs erwähnten DE 20 2013 100 715 aufweist. Anstatt der im unteren Bereich vorgesehenen, aus mehreren plattenförmigen Elementen bestehenden Baggerwaage kann das achsenförmige Kraftmesssystem der Erfindung anstelle der Gelenkachsen verwendet werden, so dass der Baggerarm baulich nicht verändert wird und dennoch mit ungewöhnlich hohen Überlasten betrieben werden kann.

### Bezugszeichenliste

- 10: Kraftmessachse
- 12: Bolzenkörper
- 14: Hülsenkörper
- 16: Stützkörper
- 18: Längsachse
- x: axiale Richtung
- y: radiale Richtung
- 20: externe Maschine
- 22: Maschinengestell
- 24: Krafteinleitungsglied (z.B. Seilrolle)
- 25: (Radial-)Spiel zu 14 und 24
- 26: Symmetrieachse
- 28: 1. Abschnitt
- 30: 2. Abschnitt
- 32: 3. Abschnitt
- 34: (Umfangs-)Nut
- 36: Messzelle
- 37: DMS
- 38: Mantelfläche von 12
- 39: Stirnseite von 12
- 40: Öffnungen (z.B. mit Innengewinde)
- 42: Befestigungsmittel (z.B. Schrauben)
- 44: Öffnungen in 16
- 46: Einkerbungen / Verdrehsicherung
- 48: Anschluss für Elektronik
- 50: Deckel (optional)
- 52: Stirnfläche von 16
- A: Axialspiel zw. 14 und 16
- KF: Kraftfluss
- SP: Spielpassung

## Patentansprüche

1. Kraftaufnehmerystem (10) zum Messen einer externen Kraft (F) nach dem Scherprinzip, wobei die Kraft (F) im Wesentlichen von radial außen, quer zu einer Längsachse (18) des Kraftaufnehmerystems (10) einwirkt, wobei das Kraftaufnehmerystem (10) aufweist:
einen radial innen positionierbaren Bolzenkörper (12);
einen axial außen positionierbaren Stützkörper (16), der eingerichtet ist, ausschließlich mit dem Bolzenkörper (12) fest verbunden zu werden; und
einen Hülsenkörper (14), der:
hülsenförmig zur koaxialen Aufnahme des Bolzenkörpers (12) ausgebildet ist;
sich koaxial zur Längsachse (18) erstreckt; und
radial außen auf dem Bolzenkörper (12) sitzend positionierbar ist;
**dadurch gekennzeichnet, dass** der Hülsenkörper (14) aufweist:
mindestens einen axial außen liegenden ersten Abschnitt (28-1, 28-2) zum radialen Einleiten der Kraft (F) über ein externes Krafteinleitungsglied (24) einer externen Maschine (20), in welche die Kraftmessachse (10) einführbar ist und deren Kraft (F) zu messen ist, wobei das externe Krafteinleitungsglied (24) radial außen auf jedem der ersten Abschnitte (28) sitzt und wobei der erste Abschnitt (28-1, 28-2) radial zum Bolzenkörper (12) beabstandet ist;
mindestens einen zweiten Abschnitt (30) zum Messen der Kraft (F), der zum Aufnehmen mindestens einer Messzelle (36) eingerichtet ist und der radial innen und/oder außen eine umfänglich verlaufende Nut (34) aufweist, wobei der Hülsenkörper (14) zumindest auch in einem axial außen liegenden Endbereich des zweiten Abschnitts (30) zum Bolzenkörper (12) beabstandet ist; und
mindestens einen dritten Abschnitt (32), der:
axial innen angeordnet ist;
axial innen an den zumindest einen zweiten Abschnitt (30) angrenzt; und
radial auf dem Bolzenkörper (12) sitzt; und
wobei in einem in die externe Maschine (20) eingebauten und montierten Zustand des Kraftaufnehmersystems (10) die Kraft (F):
von außen über das externe, axial innen liegende [siehe 0033] Krafteinleitungsglied (24) in jeden der ersten Abschnitte (28-1, 28-2) des Kraftaufnehmersystems (10) eingeleitet wird;
in einem Normalbetrieb des Kraftaufnehmersystems (10) durch jeden der zweiten Abschnitte (30) in den dritten Abschnitt (32) geleitet und von dort über den Bolzenkörper (12) in den Stützkörper (16) geleitet wird, um das Kraftaufnehmersystem (10) über ein axial außenliegendes [siehe 0033] Maschinengestell (22) der externen Maschine (20) zu verlassen, wobei das Maschinengestell (22) auf dem mindestens einen Stützkörper (16) sitzt; und
in einem Überlastbetrieb den ersten Abschnitt (28-1, 28-2) verformt, so dass jeder der ersten Abschnitte (28) radial an den Bolzenkörper (12) und/oder axial an den zumindest einen Stützkörper (16) anstößt, wodurch die Kraft (F) jeden der zweiten Abschnitte (30) auslassend, direkt aus jedem der ersten Abschnitte (28-1, 28-2) in den Bolzenkörper (12) und/oder den bzw. die Stützkörper (16) geleitet wird und das Kraftaufnehmersystem (10) final über den bzw. die Stützkörper (16) verlässt.

2. Kraftaufnehmerystem (10) nach Anspruch 1, das spiegelsymmetrisch aufgebaut ist, wobei der Hülsenkörper (14) zwei erste Abschnitte (28-1, 28-2), die axial außen angeordnet sind, zwei zweite Abschnitte (30) und einen axial zentral angeordneten dritten Abschnitt (32) aufweist, wobei jeder der zweiten Abschnitte (30) axial zwischen einem der ersten Abschnitte (28) und dem dritten Abschnitt (32) angeordnet ist.

3. Kraftaufnehmerystem (10) nach Anspruch 1 oder 2, wobei der Bolzenkörper (12) als Vollkörper mit einer äußeren Mantelfläche (38) ausgebildet ist, die vorzugsweise einen konstanten Radius (R_{M}) aufweist, wobei in den Stirnseiten (39) des Bolzenkörpers (12) jeweils eine oder mehrere Öffnungen (40) vorgesehen sind, in welche Befestigungsmittel (42) einführbar sind, um die Stützkörper (16) fest am Bolzenkörper (12) zu befestigen, ohne dass die Stützkörper (16) den Hülsenkörper (14) berühren, wobei die Stützkörper (16) axiale Öffnungen (44) zur Aufnahme und Fixierung der Befestigungsmittel (42) aufweisen.

4. Kraftaufnehmerystem nach einem der Ansprüche 1-3, das ferner Dichtungseinrichtungen (56) umfasst, wobei die Stützkörper (16) in ihren Stirnflächen (52), die dem Hülsenkörper (14) axial gegenüber liegen, in Umfangsrichtung verlaufende Nuten (54) zur Aufnahme der Dichtungseinrichtungen (56)) aufweisen.

5. Kraftaufnehmerystem (10) nach einem der Ansprüche 1-4, wobei der Bolzenkörper (12) axial länger als der Hülsenkörper (14) ist und die Stützkörper (16) zurformschlüssigen Aufnahme des Bolzenkörpers (12) eingerichtet sind.

6. Kraftaufnehmerystem (10) nach einem der Ansprüche 1-5, wobei entspricht ein Außenradius (R_{A1}) des ersten Abschnitts (28-1, 28-2) des Hülsenkörpers einem Außenradius (R_{AS}) des Stützkörpers (16).

7. Kraftaufnehmerystem (10) nach einem der Ansprüche 1-6, wobei zwischen jedem der Stützkörper (16) und dem Hülsenkörper (14) im montierten Zustand des Kraftaufnehmersystems ein Axialspiel (A) vorgesehen ist.

8. Kraftaufnehmerystem (10) nach einem der Ansprüche 1-7, wobei der Bolzenkörper (12), der Hülsenkörper (14) und die Stützkörper (16) in einem demontierten Zustand des Kraftaufnehmerystems (10) voneinander getrennt vorgesehen sind.

9. Kraftaufnehmerystem (10) nach einem der Ansprüche 1-8, wobei ein Außenradius des dritten Abschnitts (32) des Hülsenkörpers (14) so gewählt ist, dass der dritte Abschnitt (32) des Hülsenkörpers (14) über seine gesamte axiale Länge radial zum Krafteinleitungsglied (24) beabstandet ist.

## Claims

1. A force-transducer system (10) for measuring an external force (F) under shearing, wherein the force (F) acts substantially, from radially external, transversally to a longitudinal axis (18) of the force-transducer system (10), wherein the force-transducer system (10) comprises:
a pin body (12) radially postionable internally;
a supporting body (16) axially positionable externally, which is configured to be connected fixedly to the pin body (12) only; and
a sleeve body (14) which:
is formed in a sleeve-shaped manner for coaxially receiving the pin body (12);
extends coaxially to the longitudinal axis (18); and
is sittingly positionable radially external on the pin body (12) **characterized in that** the sleeve body (14) comprises:
at least one axially external first portion (28-1, 28-2) for radially introducing the force (F) via an external force-introduction member (24) of an external machine (20), into which the force-measuring axis (10) is insertable and a force (F) of which is to be measured, wherein the external force-introduction member (24) sits radially external on each of the first portions (28) and wherein the first portion (28-1, 28-2) is radially distanced to the pin body (12);
at least one second portion (30) for measuring the force (F) configured for receiving at least one measuring cell (36) and comprising a circumferentially extending groove (34) radially internally and/or externally, wherein the sleeve body (14) is distanced to the pin body (12) at least also in an axially external end section of the second portion (30); and
at least one third portion (32) which:
is arranged axially internally;
is axially internally adjacent to the at least one second portion (30); and
sits radially on the pin body (12); and
wherein the force (F), in a state of the force-transducer system (10) being installed and mounted in the external machine (20):
is introduced from the external via the external axially-internal force-introduction member (24) into each of the first portions (28-1, 28-2);
is directed in normal operation of the force-transducer systems (10) through each of the second portions (30) into the third portion (32) and is directed from there via the pin body (12) into the supporting body (16) for exiting the force-transducer system (10) via an axially external machine frame (22) of the external machine (20), wherein the machine frame (22) sits on the at least one supporting body (16); and
in an overload operation deforms the first portion (28-1, 28-2) such that each of the first portions (28) abuts radially against the pin body (12) and/or axially against the at least one supporting body (16), whereby the force (F) is directed, leaving out each of the second portions (30), directly from each of the first portions (28-1, 28-2) into the pin body (12) and/or the supporting body (16) and exits the force-transducer system (10) finally via the supporting body (16).

2. The force-transducer system (10) of claim 1 being structured in a mirror-symmetrical manner, wherein the sleeve body (14) comprises two first portions (28-1, 28-2) being arranged axially external, two second portions (30), and one axially centerally arranged third portion (32), wherein each of the second portions (30) is arranged axially between one of the first portions (28-1, 28-2) and the third portion (32).

3. The force-transducer system (10) of claim 1 or 2, wherein the pin body (12) is formed as a solid body having an outer circumferential surface (38), which preferably has a constant radius (R_{M}), wherein in the front-end sides (39) of the pin body (12) respectively one or more openings (40) are provided into which fasteners (42) are insertable for mounting the supporting body (16) fixedly to the pin body (12) without the supporting body (16) contacting the sleeve body (14), wherein the supporting body (16) comprises axial openings (44) for receiving and fixing the fasteners (42).

4. The force-transducer system of any of claims 1-3 further including sealing devices (56), wherein the supporting bodies (16) comprise grooves (54) extending in a circumferential direction in the front-end sides (52), which are axially opposite to the sleeve body (14), for receiving the sealing devices (56).

5. The force-transducer system (10) of any of claims 1-4, wherein the pin body (12) is axially longer than the sleeve body (14), and the supporting bodies (16) are configured to receive the pin body (12) in a form-closed manner.

6. The force-transducer system (10) of any of claims 1-5, wherein an outer radius (R_{A1}) of the first portions (28-1, 28-2) of the sleeve body corresponds to an outer radius (R_{AS}) of the supporting body (16).

7. The force-transducer system (10) of any of claims 1-6, wherein between each of the supporting body (16) and the sleeve body (14) in a mounted state of the force-transducer system an axial clearance (A) is provided.

8. The force-transducer system (10) of any of claims 1-7, wherein the pin body (12), the sleeve body (14), and the supporting body (16) are provided separately from each other in a disassembled state of the force-transducer system (10).

9. The force-transducer system (10) of any of claims 1-8, wherein an outer radius of the third portion (32) of the sleeve body (14) is selected such that the third portion (32) of the sleeve body (14) is radially distanced to the force-introduction member (24) over an entire axial length thereof.

## Revendications

1. Système capteur de force (10) destiné à mesurer une force externe (F) selon le principe du cisaillement, la force (F) agissant sensiblement depuis l'extérieur dans le sens radial, transversalement par rapport à un axe longitudinal (18) du système capteur de force (10), le système capteur de force (10) comprenant :
un corps de boulon (12) positionnable à l'intérieur dans le sens radial ;
un corps d'appui (16) positionnable à l'extérieur dans le sens axial, lequel est conçu pour être relié à demeure exclusivement au corps de boulon (12) ; et
un corps de douille (14) qui :
est configuré en forme de douille pour l'accueil coaxial du corps de boulon (12) ;
s'étend de manière coaxiale par rapport à l'axe longitudinal (18) ; et
est positionnable dans le sens radial à l'extérieur en appui sur le corps de boulon (12) ;
**caractérisé en ce que**
le corps de douille (14) possède :
au moins une première portion (28-1, 28-2) qui se trouve axialement à l'extérieur, destinée à transmettre radialement la force (F) par le biais d'un élément de transmission de force externe (24) d'une machine externe (20), dans laquelle peut être introduit l'axe de mesure de force (10) et dont la force (F) est à mesurer, l'élément de transmission de force externe (24) reposant dans le sens radial à l'extérieur sur chacune des premières portions (28) et la première portion (28-1, 28-2) étant espacée du corps de boulon (12) dans le sens radial ;
au moins une deuxième portion (30) destinée à mesurer la force (F), laquelle est conçue pour accueillir au moins une cellule de mesure (36) et laquelle possède une rainure (34) qui s'étend circonférentiellement dans le sens radial à l'intérieur et/ou à l'extérieur, le corps de douille (14) étant également espacé du corps de boulon (12) dans une zone d'extrémité, se trouvant axialement à l'extérieur, de la deuxième portion (30) ; et
au moins une troisième portion (32), qui :
est disposée à l'intérieur dans le sens axial ; et
est adjacente à l'au moins une deuxième portion (30) à l'intérieur dans le sens axial ; et
repose sur le corps de boulon (12) dans le sens radial ; et
dans un état installé dans la machine externe (20) et monté du système capteur de force (10), la force (F) :
étant transmise depuis l'extérieur par le biais de l'élément de transmission de force (24) [voir 0033] externe, se trouvant à l'intérieur dans le sens axial, dans chacune des premières portions (28-1, 28-2) du système capteur de force (10) ;
dans un fonctionnement normal du système capteur de force (10), étant transmise par chacun des deuxièmes portions (30) dans la troisième portion (32) et, de là, transmise dans le corps d'appui (16) par le biais du corps de boulon (12) en vue de quitter le système capteur de force (10) par le biais d'un bâti de machine (22), se trouvant à l'extérieur dans le sens axial [voir 0033], de la machine externe (20), le bâti de machine (22) reposant sur l'au moins un corps d'appui (16) ; et
dans un régime de surcharge, déformant la première portion (28-1, 28-2) de telle sorte que chacune des premières portions (28) vient en butée dans le sens radial contre le corps de boulon (12) et/ou dans le sens axial contre l'au moins un corps d'appui (16), moyennant quoi la force (F), en omettant chacune des deuxièmes portions (30), est acheminée directement depuis chacune des premières portions (28-1, 28-2) dans le corps de boulon (12) et/ou le ou les corps d'appui (16) et quitte finalement le système capteur de force (10) par le biais du ou des corps d'appui (16).

2. Système capteur de force (10) selon la revendication 1, lequel est de construction symétrique en miroir, le corps de douille (14) possédant deux premières portions (28-1, 28-2), qui sont disposées à l'extérieur dans le sens axial, deux deuxièmes portions (30) et une troisième portion (32) disposée de manière centrale dans le sens axial, chacune des deuxièmes portions (30) étant disposée axialement entre l'une des premières portions (28) et la troisième portion (32).

3. Système capteur de force (10) selon la revendication 1 ou 2, le corps de boulon (12) étant réalisé sous la forme d'un corps plein ayant une enveloppe extérieure (38), qui possède de préférence un rayon (R_{M}) constant, une ou plusieurs ouvertures (40) se trouvant respectivement dans les côtés frontaux (39) du corps de boulon (12), dans lesquelles peut être introduit un moyen de fixation (42) en vue de fixer à demeure les corps d'appui (16) au corps de boulon (12) sans que les corps d'appui (16) touchent le corps de douille (14), les corps d'appui (16) possédant des ouvertures axiales (44) destinées à accueillir et à immobiliser le moyen de fixation (42).

4. Système capteur de force selon l'une des revendications 1 à 3, comprenant en outre des dispositifs d'étanchéité (56), les corps d'appui (16) possédant, dans leurs surfaces frontales (52) qui sont axialement à l'opposé du corps de douille (14), des rainures (54) qui s'étendent dans la direction circonférentielle destinées à accueillir les dispositifs d'étanchéité (56).

5. Système capteur de force (10) selon l'une des revendications 1 à 4, le corps de boulon (12) étant axialement plus long que le corps de douille (14) et les corps d'appui (16) étant conçus pour accueillir le corps de boulon (12) par complémentarité de formes.

6. Système capteur de force (10) selon l'une des revendications 1 à 5, un rayon extérieur (R_{A1}) de la première portion (28-1, 28-2) du corps de douille correspondant à un rayon extérieur (R_{AS}) du corps d'appui (16).

7. Système capteur de force (10) selon l'une des revendications 1 à 6, un jeu axial (A) étant présent entre chacun des corps d'appui (16) et le corps de douille (14) à l'état monté du système capteur de force.

8. Système capteur de force (10) selon l'une des revendications 1 à 7, le corps de boulon (12), le corps de douille (14) et les corps d'appui (16) étant prévus de manière séparée les uns des autres dans un état démonté du système capteur de force (10).

9. Système capteur de force (10) selon l'une des revendications 1 à 8, un rayon extérieur de la troisième portion (32) du corps de douille (14) étant choisi de telle sorte que la troisième portion (32) du corps de douille (14) est espacée dans le sens radial par rapport à l'élément de transmission de force (24) sur toute sa longueur axiale.
